# EUROPÄISCHE PATENTSCHRIFT

(11) **EP 1 827 116 B1**
(45) Veröffentlichungstag und Bekanntmachung des Hinweises auf die Patenterteilung: **13.08.2008**
(21) Anmeldenummer: 05792310.4
(22) Anmeldetag: 17.09.2005
(51) Int. Cl.: A22B 5/00

(54) **GEWINNUNG VON DATEN ZUM KLASSIFIZIEREN VON SCHLACHTTIERKÖRPERN SOWIE ZUR BESTIMMUNG VON QUALITÄTEN UND QUANTITÄTEN DERSELBEN**
DATA ACQUISITION FOR CLASSIFYING SLAUGHTERED ANIMAL BODIES AND FOR THEIR QUALITATIVE AND QUANTITATIVE DETERMINATION
ACQUISITION DE DONNEES POUR CLASSER DES CORPS D'ANIMAUX D'ABATTAGE ET DETERMINER LEURS QUALITES ET QUANTITES

(30) Priorität: 17.11.2004 DE 102004055351
(43) Veröffentlichungstag der Anmeldung: 05.09.2007
(73) Patentinhaber: CSB-System AG, 52511 Geilenkirchen (DE)
(72) Erfinder: SCHIMITZEK, Peter, 52511 Geilenkirchen (DE)
(74) Vertreter: Haussingen, Peter
(86) Internationale Anmeldenummer: PCT/DE2005/001637
(87) Internationale Veröffentlichungsnummer: WO 2006/053509

(56) Entgegenhaltungen:
- WO-A-01/22081
- DE-A1- 10 050 836
- DE-A1- 19 847 232
- DE-C1- 19 936 032
- GB-A- 2 371 737
- US-A- 4 785 817
- US-A- 5 944 598

## Beschreibung

Die Erfindung bezeichnet ein nichtinvasives Verfahren, mit dem komplex strukturierte Konturen als Merkmale eines Schlachttierkörpers auf Basis eines charakteristischen Teilstücks mittels Bildverarbeitung voneinander unterschieden und identifiziert werden können, das insbesondere zur Bestimmung von Daten zur Berechnung des Muskelfleischanteils, der Handelsklasse sowie den damit im Zusammenhang stehenden Handelswert und Marktwert als auch zur Qualitätseinstufung von Schlachttierkörpern, unter Einhaltung von gesetzlichen Vorgaben, vorzugsweise in Schlacht- und Fleischverarbeitungsbetrieben, eingesetzt werden kann.

Aus dem Stand der Technik sind eine Reihe automatisch ablaufender Verfahren zur Bestimmung von Daten eines Schlachttierkörpers in dessen Spaltebene entlang des Rückgrats mittels optischer Bildverarbeitung zur anschließenden Klassifizierung und Qualitätseinstufung bekannt.

So werden in den Druckschriften DD 298 310 A5 / DE 41 31 556 C2 sowie DE 41 09 345 C2 Verfahren zur Bestimmung bzw. Analyse von Schlachttierkörperhälften durch Bildverarbeitung beschrieben, bei denen die äußere Kontur, Speckschicht, Fleisch- und Rückenspeckverhältnis ermittelt werden, indem Aufnahmen von der gesamten Schlachttierhälfte mit Wirbelsäule und allen Zwischenwirbelschichten angefertigt werden. Als Fixpunkt zur Ermittlung der Parameter für die Zerlegung und Klassifizierung wird vom Kreuzbein der Wirbelsäule ausgegangen, das ebenso wie die anderen Wirbel mittels Objektanalyse bestimmt wird, wobei sich im realen Verarbeitungsprozess die für die Analyse erforderlichen Konturen nicht immer hinreichend sicher selektieren lassen.

Die Druckschrift DE 197 33 216 C1 beschreibt ein Verfahren zur Bewertung von Schlachttierhälften durch optische Bildverarbeitung, das in Anlehnung an die klassische Zweipunkt-Methode eine Klassifizierung anhand einer optischen Bildauswertung der erweiterten Lendenregion unter Ausschluß subjektiver Fehlerquellen ermöglichen soll.

Es ist auch ein Verfahren zur Bewertung von Schlachttierhälften durch optische Bildverarbeitung aus der Druckschrift DE 198 47 232 C2 bekannt, bei dem ein photogrammetrisches Verfahren als Nachbildung der herkömmlichen Zweipunkt-Methode zur Bewertung eingesetzt wird. In der Lenden- und Schinkenregion werden zwei markante Punkte, von denen der erste das körperseitige Ende des Schloßknochens ist, der zweite das körperseitige Ende des MGM (Musculus Glutaeus Medius) darstellt und eine Gerade mit der Richtung des mittleren Verlaufs des Rückenspecks, photogrammetrisch erfaßt. Zur eigentlichen Bewertung werden die Längen von Teilstrecken genutzt, die sich auf einer Senkrechten auf der zum Schloßknochen parallel verschobenen Gerade in Höhe des zweiten markanten Punktes durch die Dicke des Rückenspecks ergeben. Bei diesem Verfahren werden zwar die subjektiven Messfehler der manuell durchgeführten ZP-Methode ausgeschlossen, es wird vorausgesetzt, dass mit der optischen Bildverarbeitung die erforderlichen Konturen und Strukturen sicher erkannt werden.

Aus der Druckschrift DE 199 36 032 C1 ist ein weiteres Verfahren bekannt, das mittels optischer Bildverarbeitung eine automatische Qualitätsbeurteilung von Schlachttierhälften, insbesondere von Schlachtschweinen gewährleistet, wobei gegenüber den bekannten Verfahren eine höhere, reproduzierbare Schätzgenauigkeit erzielt wird, die durch Fehler im Spaltprozeß des Schlachttiers nur unwesentlich, durch nicht absolut senkrechte Bilderfassung zur Spaltebene nicht beeinflußt werden kann, wobei eine optische Aufnahme der Schlachttierhälfte in der Spaltebene, im Bereich der Schinken- und Lendenregion photogrammetrisch auf der Grundlage bestimmter markanter Bezugspunkte ausgewertet wird.
Als markante Bezugspunkte werden dabei die Wirbelsäule, der Schloßknochen, die dünnste Speckdicke am MGM und die Konturen des Rückenspecks im ausgewählten Bereich genutzt.
Der zur Beurteilung der Qualität maßgebliche Muskelfleischanteil wird durch Addition von zueinander ins Verhältnis gesetzter, zum geraden Verlauf des Rückenmarkkanals senkrechter Teilstrecken im Bereich des Fleischs und der Speckschicht unter Einbeziehung von aus Regressionsberechnungen ermittelter Konstanten für jeden Term und einer Grundkonstante berechnet. Im Rahmen des Verfahrens wird zwar der Messwert für das Speckmaß (S) in Übereinstimmung mit den gesetzlichen Vorschriften an richtigen Punkten ermittelt, jedoch wird das Fleischmaß (F) nicht bestimmt, wodurch die Berechnung des Muskelfleischanteils (MF%) nicht mit der amtlichen Formel erfolgt, somit eine Einstufung in die Handelsklassen nicht erfolgen kann.

Ein Verfahren zur Handelswertbestimmung der Teilstücke von Schweineschlachttierkörpern ist aus der Druckschrift DE 119 52 628 A1 bekannt, wobei Gewichte, Gewichts- und Fleischanteile von Teilstücken wie Schinken, Kotelett, ausgelöstes Kotelett, Filet, Schulter, Bug, Bauch und/oder weiterer selbständig handelbarer oder weiterzuverarbeitender Teilstücke mittels Online-Bewertung von Schweinehälften bestimmt wird. Zur Durchführung des Verfahrens werden den Körperbau beschreibende Prädiktoren bestimmt, die aus dem äußeren Konturverlauf der Schweinehälfte und der daraus abzuleitenden Fläche, Lage und Verlauf der Wirbelsäule und daraus abzuleitender Längen und Flächen von Teilbereichen des Schlachttierkörpers sowie einer für die Schweinehälften gewonnenen, durch die relative Dicke und den Verlauf der näherungsweise gesamten subkutanen Speckschicht des Rückenbereichs repräsentierende Verfettungsinformationen resultieren. Die Prädiktoren werden zueinander unter Berücksichtigung zwischen ihnen bestehender statistischer Zusammenhänge in Relation gesetzt, wodurch das Gewicht von interessierenden Teilstücken, deren Gewichts- und Fleischanteile am Gesamtgewicht der Karkasse online in der Schlachtlinie bestimmt werden sollen. Im Ablauf des Verfahrens muss die Videoerfassung der kompletten Schweinehälfte erfolgen und das Bildobjekt aufwändig bearbeitet sowie ausgewertet werden, um lediglich den Handelswert zu bestimmen. Auf Grund des großen Bildbereichs über die gesamte Spaltebene werden die Bewertungsgeschwindigkeit negativ beeinflusst als auch die Gewichte der Teilstücke nicht genau genug bestimmt, zudem führen Fehlerkennungen von Konturen und Strukturen im Bildbereich zu unrealistischen Werten.

Weiterhin wird ein Verfahren zum Ermitteln der Qualität und Quantitäten eines Schlachttierkörpers, mit dem dessen Handelsklasse, Handelswert, Marktwert und Qualität bestimmbar ist und die Bedingungen der einschlägigen amtlichen Vorschriften und Verordnungen erfüllt, in der Patentanmeldung mit dem Aktenzeichen DE 103 58 487.0 beschrieben. Es werden dabei die mit Zerlegeversuchen einer genügenden Anzahl von Schlachtkörpern gewonnenen Ergebnisdaten von Gewichtsanteilen aus Einzelteilausbeuten mit den von beiden Hälften eines Schlachtkörpers in der Schinken- und Lendenregion ermittelten charakteristischen Messwerten und Parameter unter Einbeziehung des Gesamtgewichts miteinander korreliert und daraus Verhältnisdaten gewonnen und im laufenden Schlachtbetrieb erfolgt zur Schätzung der Einzelteilausbeuten eine Simulationsrechnung mit den vorliegenden Verhältnisdaten unter Berücksichtigung des Gesamtgewichts zweier zusammengehöriger Hälften eines Schlachtkörpers und der für diesen spezifisch in der Schinken- und Lendenregion ermittelten charakteristischen Messwerte und Parameter.
In einer Variante erfolgt die Schätzung der Einzelteilausbeuten nur auf Basis der spezifisch in der Schinken- und Lendenregion ermittelten charakteristischen Messwerte und Parameter.

Allen diesen bekannten Verfahren ist gemeinsam, dass die bei der Bildverarbeitung eingesetzten vollautomatischen Kunturerkennungsalgorithmen zum Erkennen von komplex strukturierten Konturen zwangsläufig eine gewisse Fehlerkennungsrate aufweisen. Bei falsch erkannten Konturen kann man zwar durch einen anschließenden Optimierungsprozess versuchen, die aufgetretenen Fehler zu korrigieren, wobei mit den neu bestimmten Konturen in der Regel jedoch wieder neue Auswertefehler auftreten, wodurch falsche oder fehlerbehaftete Daten bzw. Werte für nachfolgende Berechnungen vorliegen.

Zur Klassifizierung von Schlachttierkörpern sind neben Verfahren mittels optischer Bildverarbeitung, solche bekannt, die mit Ultraschall arbeiten.
In der Druckschrift US 4 785 817 A wird ein Verfahren und eine Vorrichtung zur Bewertung von Fleisch mittels Ultraschall, zur schnellen und genauen Messung des Fett- und Fleischanteils eines Schlachttiers beschrieben.
Das Ultraschallbild einer Region, wie der Rippen oder des Schinkens eines Schlachttiers wird auf einem Display dargestellt.
Zur eigentlichen Messung des Fett- und Fleischanteils benutzt ein Operateur einen Griffel eines Digitalisierers, der auf einer ausgewählten Stelle der Kontur im dargestellten Bild positioniert wird, wobei dieser Punkt als Anfang bzw. Ursprung der aufgezeichneten Daten genutzt wird, dann wird der Griffel um den zu messenden Bildbereich bewegt,
wobei der Operateur den Griffel periodisch auf dem Weg um den einzugrenzenden Bildbereich auf die Darstellung presst, wodurch eine Serie von Datenpunkten erzeugt wird.
Das Gebiet wird dabei mit dem Griffel vollständig eingegrenzt. Die erzeugte Serie von Datenpunkten, die das gesamte Gebiet des Segments definieren, werden an einen Computer übertragen und die Fläche des Gebiets, z.B. in Form des Fleischanteils, berechnet.
Des Weiteren kann der Griffel dazu genutzt werden, die Dikke von Fettschichten zu bestimmen, indem entsprechende Datenpunkte auf der Kontur erzeugt werden.
Die Dicke der Fettschicht wird in Form der Strecke zwischen zwei durch den Operateur auf der Kontur des Fetts gesetzter Punkte berechnet.

Das beschriebene Verfahren bedingt einen sehr hohen manuellen Aufwand zur Bestimmung des Fleisch- und Fettanteils von Schlachttieren und ist für automatisierte Bewertungen nicht geeignet.

Die Aufgabe der Erfindung ist es, ein nichtinvasives Verfahren zum automatischen Erkennen von komplex strukturierten Konturen mit gegen Null tendierender Fehlerkennungsrate durch Interaktion eines Bedieners mit einem Rechner zu entwickeln, mit dem Merkmale eines Schlachttierkörpers voneinander unterschieden und identifiziert werden können, das auf Basis eines charakteristischen Teilstücks mittels Bildverarbeitung, insbesondere zur Bestimmung von Daten zur Berechnung des Muskelfleischanteils, der Handelsklasse sowie den damit im Zusammenhang stehenden Handelswert und Marktwert als auch zur Qualitätseinstufung von Schlachttierkörpern, unter Einhaltung von gesetzlichen Vorgaben bzw. spezifischen Regelungen arbeitet.

Der Grundgedanke der Erfindung besteht darin, dass bei Fehlerkennung von zu unterscheidenden und identifizierenden komplex strukturierten Konturen von Schlachttierkörpern auf Grund starker Verunreinigungen im Aufnahmebereich oder physiologischer Besonderheiten, wie einer schlecht erkennbaren Fascie an Muskeln, Verwachsungen oder schwach ausgebildeter Muskeln, durch ein, in Schlacht- und Fleischverarbeitungsbetrieben für die Beurteilung von Schlachttierkörpern eingesetztes, automatisch ablaufendes Verfahren mittels Bildverarbeitung, ein Bediener an einer entsprechenden Arbeitsstation in Form eines PC's mit dem Rechner in Interaktion tritt und hinreichende Hinweise auf die nicht oder nicht richtig erkannte, zu suchende Kontur gibt.
Diese Hinweise ermöglichen es einem erneut abfolgenden Konturerkennungsalgorithmus, die zu suchende Kontur sicher zu erfassen. Vom Bediener können die Hinweise insbesondere grafisch mit Hilfe einer Bildwiedergabeeinrichtung in die Darstellung eines Bildes des interessierenden Bereichs des Schlachttierkörpers eingegeben werden, alternativ auch in audiovisueller oder textlicher Form.
Im Bildbereich setzt der Bediener mindestens einen Stützpunkt in einem oder mehreren Bereichen, in denen die Messungen erfolgen sollen. Diese Stützpunkte als geometrische Vorgaben können den Anfangspunkt, den Endpunkt, den Mittelpunkt oder einen beliebigen Punkt der zu findenden Kontur kennzeichnen. Der Stützpunkt kann alternativ auch einen zulässigen oder verbotenen Bereich für die Kontur markieren. Bei mehr als einem Stützpunkt lassen sich zusätzlich Tensorvorgaben höherer Ordnung ermitteln, wie Vektorvorgaben ab zwei Stützpunkten und Krümmungsvorgaben ab drei Stützpunkten.

Des Weiteren ist es möglich, aus der Analyse der Umgebung des Stützpunktes Startparameter für den Konturerkennungsalgorithmus zu gewinnen. Diese Parameter können beispielsweise in Form von minimalen, maximalen oder durchschnittlichen Luminanzen, Chrominanzen und Kontrasten vorliegen. Es lassen sich aber auch komplexere Merkmale wie Texturen als Parameter ermitteln.

Nachfolgend werden in üblicher Weise, charakteristische Messwerte und Parameter, wie Strecken, Winkel und Flächen als auch die ebenfalls mit dem Bild vorliegenden Helligkeits- bzw. Farbinformationen, vorzugsweise in der Lenden- und Schinkenregion an Hand selektierter markanter Punkte und Strukturen im Bildbereich ermittelt.

Bei Schlachtschweinen werden beispielsweise im europaweit gültigen ZP-Verfahren exakte Messwerte für das Speckmaß (S) und das Fleischmaß (F) ermittelt, aus denen mit der amtlichen Formel unmittelbar der Muskelfleischanteil (MF%) berechnet wird und somit die Einstufung in die Handelsklasse erfolgt.
Auf Basis ermittelter Längen von senkrechten Teilstrecken im Bereich des geraden Abschnitts der Wirbelsäule im Aufnahmebereich zur Außenkontur sowie dem Speckverlauf und deren Verhältnis zueinander können die Koteletten bewertet werden.
Mit weiteren charakteristischen Werten ist im Zusammenhang mit Ergebnissen aus Zerlegeversuchen eine Schätzung der Einzelteilausbeute gegeben. Mit der damit vornehmbaren Teilstückbewertung ergibt sich wie üblich der Handelswert.
Ausgehend vom Gewicht des Schlachtkörpers erfolgt die Schätzung der Gewichte der Teilstücke, aus deren Summe sich der Marktwert ergibt.

Mit den ermittelten Helligkeits- bzw. Farbinformationen erfolgt die Qualitätseinstufung des Schlachtkörpers.

Die Vorteile der Erfindung bestehen insbesondere in der auf nahezu Null reduzierten Fehlerkennungsrate bei der Beurteilung von Qualität und Quantität eines Schlachttierkörpers und damit verbundener positiver ökonomischer Effekte für den Erzeuger und Verarbeiter des Fleischs.

Es wird eine umfassende Bewertung und Klassifizierung eines Schlachttierkörpers und dessen Teilstücken ermöglicht.

Eine Implementation der Interaktion ist bei allen nichtinvasiven automatischen Verfahren, die eine bildliche Darstellung eines Bereichs mit zu erkennenden Konturen und Strukturen beinhalten, in dem Messwerte ermittelt werden sollen, möglich.

Die Erfindung wird als Ausführungsbeispiel an Hand von
- Fig. 1: als Aufnahme einer Hälfte eines Schlachttierkörpers in der Lenden- und Schinkenregion mit unklaren Konturen,
- Fig. 2: als Aufnahme einer Hälfte eines Schlachttierkörpers in der Lenden- und Schinkenregion mit Darstellung einer Fehlerkennung charakteristischer Messwerte und Parameter und
- Fig. 3: als Aufnahme einer Hälfte eines Schlachttierkörpers in der Lenden- und Schinkenregion mit Darstellung von Stützpunkten als Markierungen sowie der damit ermittelten charakteristischer Messwerte und Parameter
näher erläutert.

Eine spezielle Methode der Klassifizierung von Schweineschlachtkörpern, das so genannte ZP-Verfahren, startet mit der Identifizierung des Musculus Glutaeus Medius und des Wirbelstrangs.
Anschließend wird zunächst das Speckmaß (S), als dünnste Stelle des Speckes (einschließlich Schwarte) über dem Musculus Glutaeus Medius (in Millimetern) und danach das Fleischmaß (F) als kürzeste Verbindung des vorderen, cranialen Ende des Musculus Glutaeus Medius zur oberen, dorsalen Kante des Wirbelkanals (in Millimetern) bestimmt.
Aus diesem so ermittelten Speckmaß und Fleischmaß ergibt sich dann gemäß Anlage 4 der Handelsklassenverordnung (HKL-VO) der Muskelfleischanteil des Schweineschlachtkörpers in Prozent. Nach Anlage 1 aus der HKL-VO wird sodann die Zuordnung der Handelsklasse durchgeführt.

Die Klassifizierung der Schweineschlachtkörper erfolgt mit einem zugelassenen Klassifizierungsgerät, das im Wesentlichen aus einer Bildaufnahmeeinrichtung und einem Computerarbeitsplatz mit entsprechender Software besteht, dessen Bedienung durch neutrale Klassifizierer erfolgt. Diese sind in der Regel vereidigte Sachverständige, die sehr genau die Speck-, Fleisch und Wirbelkonturen eines Schlachttierkörpers beurteilen können.
Die Verantwortung für die korrekte Beurteilung und Klassifizierung des Schlachttierkörpers verbleibt somit beim Klassifizierer.

Zu Beginn des Vorgangs wird in bekannter Weise von einem entlang der Wirbelsäule geteilten Schlachttierkörper in der Lenden- und Schinkenregion mit einem bildgebenden Verfahren ein digitales Bild erstellt, das einer Bildanalyse unterzogen wird, bei der Konturverläufe von Fleischgewebe und Fettgewebe und Knochen erfasst werden. Anhand der Konturverläufe werden einzelne Strecken und Flächen sowie über Konturbereiche gemittelte Strecken gemessen als auch Helligkeits- und/oder Farbwerte gewonnen.

Die Gewinnung der charakteristischen Messwerte und Parameter in der Schinken- und Lendenregion erfolgt beispielsweise in Anlehnung an das in der Druckschrift DE 199 36 032 C1 bzw. der Patentanmeldung DE 103 58 487.0 beschriebene Verfahren.

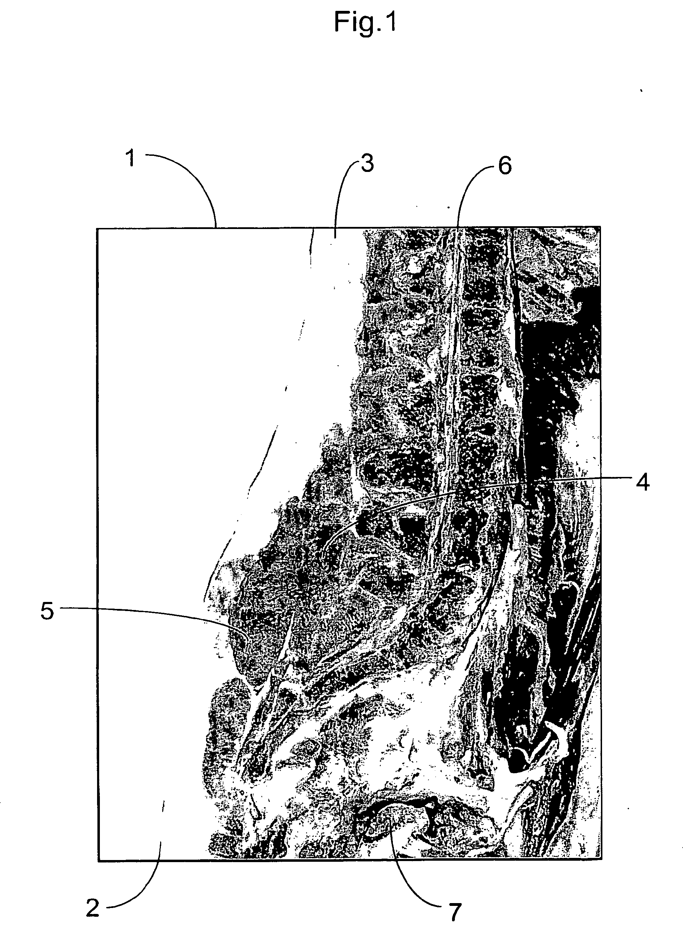

Nach Fig.1 wird hierbei ein Bildbereich 1 der Schinken- und Lendenregion einer Schlachtkörperhälfte eines Schweins mit allen Details aufgenommen und anschließend photogrammetrisch ausgewertet.

Der Bildbereich 1 erfasst im Kontrast zu einem dunklen Hintergrund die gesamte Breite der erweiterten Schinken- und Lendenregion mit deren Außenkontur 2.

In üblicher Weise erfolgt anhand einer Histogrammanalyse zunächst die Renormierung der Schwellenparameter auf die jeweilige mittlere Helligkeit des Schweineschlachtkörpers mit anschließender rechentechnischer Selektion der unterschiedlichen Gewebepartien auf Basis der Farb- und/oder Helligkeitsunterschiede im Bildbereich 1. Mit Hilfe von Selbstkonsistenzprüfungen werden Verunreinigungen, wie durch Blut, weitestgehend aus dem Bild herausgefiltert.
Im nächsten Schritt wird der helle Speck vom dunkleren Fleisch separiert und auf diese Weise die Bestimmung von Speckflächen 3 und Fleischflächen 4 vorgenommen.

Innerhalb der Fleischflächen 4 soll unter anderem die Kontur eines Musculus Glutaeus Medius (MGM) 5 durch einen Konturverfolgungsalgorithmus mit anschließender Bestimmung der geometrischen Lage identifiziert werden.
Wie aus Fig. 1 ersichtlich, ist a) die Kontur des MGM 5 auf Grund physiologischer Eigenheiten in der Fleischfläche 4 nicht klar abgegrenzt, wobei die Ursachen hierfür z.B. Verwachsungen oder eine geringe Ausbildung der Fascie des MGM 5 sein können;
b) ein Wirbelkanal 6 nicht eindeutig erkennbar, da dieser im Spaltprozess nicht mittig getroffen wurde oder blutig ist und
c) ein Schlossknochen 7 wegen teilweiser Verdeckung durch Fettgewebe oder Blut nicht sicher identifizierbar.

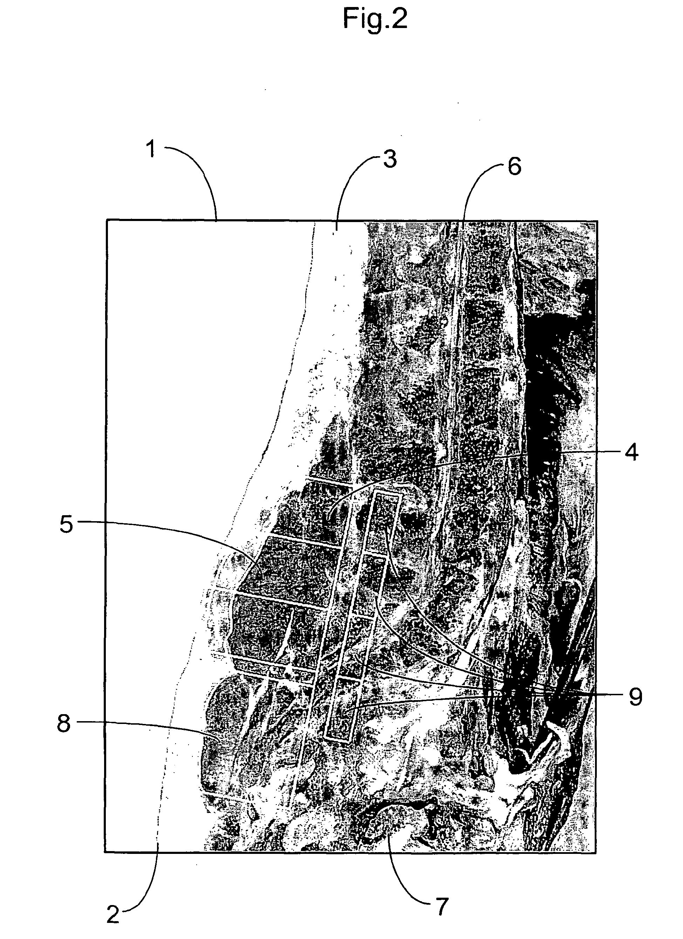

Die in einem solchen Bild durchgeführte Konturanalyse weist, wie in Fig.2 dargestellt, zwangsläufig Fehlerkennungen auf, die der Klassifizierer erkennt und/oder in Form einer Warnung bzw. Signalisierung als Fehlermeldung vom Rechner ausgegeben werden.
Im gewählten Bild wird eine dem MGM 5 ähnliche Fleischfläche 8 mit der automatisch ablaufenden Bildanalyse als MGM 5 identifiziert und Wirbel 9 im dorsalen Bereich der Wirbelsäule falsch zugeordnet als auch der Schlossknochen 7 nicht gefunden.
Würde die Bestimmung der Messwerte und Parameter zur Bewertung des Schlachttiers auf Basis des Ergebnisses dieser Analyse erfolgen, so ergäben sich absolut falsche Bewertungen.

Die Fehlerkennung wird vom Klassifizierer erkannt, diesem angezeigt beziehungsweise gemeldet. Im Bildbereich 1 setzt der Klassifizierer als Bediener daraufhin mindestens einen Stützpunkt in einem oder mehreren Bereichen, in denen die Messungen erfolgen sollen. Diese Stützpunkte als geometrische Vorgaben können den Anfangspunkt, den Endpunkt, den Mittelpunkt oder einen beliebigen Punkt der zu findenden Kontur kennzeichnen.
Es ist hierbei in der Regel ausreichend, nur im Bereich der nicht erkannten Struktur, wie dem MGM 5 und/oder der Wirbel 9 und/oder des Schlossknochens 7 Stützpunkte zu markieren.

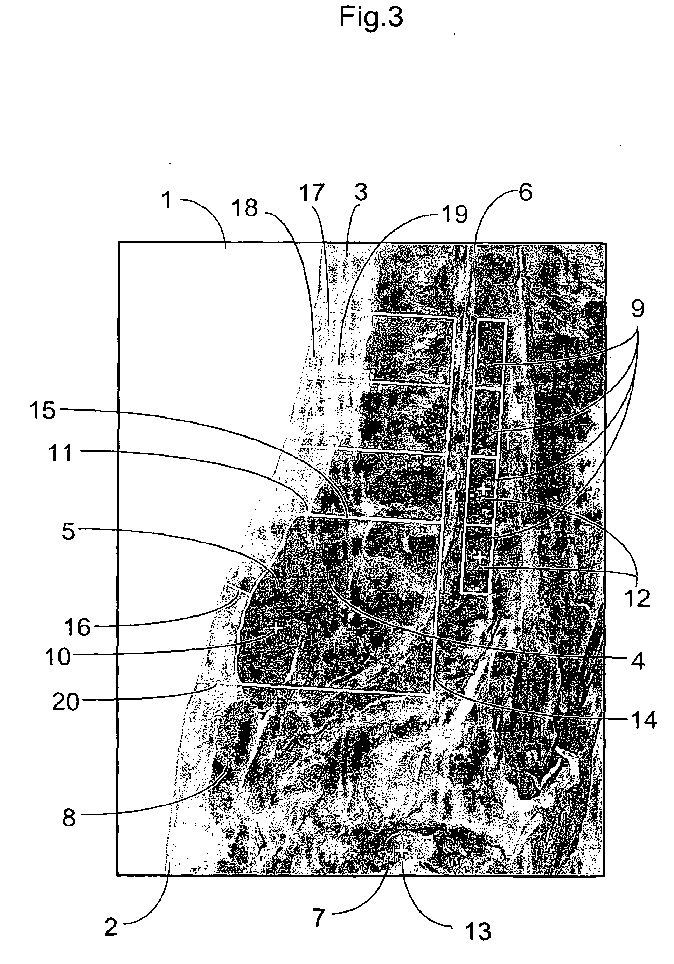

Im vorliegenden Beispiel werden nach Fig.3:
a) zur richtigen Erkennung der Kontur des MGM 5 ein erster Stützpunkt 10 im MGM 5 zum Auffinden von Helligkeitsinformationen und ein zweiter Stützpunkt 11 auf das craniale Ende des MGM 5 als Lageinformation gesetzt;
b) zur Unterstützung des Auffindens des Wirbelkanals 6 werden vorzugsweise zwei benachbarte Wirbel 9 mit jeweils einem weiteren Stützpunkt 12 markiert, wobei zusätzliche Richtungsinformationen ermittelt werden und
c) zur Identifikation und Konturerkennung des Schlossknochens 7 wird ein zusätzlicher Stützpunkt 13 in dessen cranialem Endbereich gesetzt.
   Nach der, mit Hilfe der gesetzten Stützpunkte erneut durchgeführten Konturanalyse wird a) der Musculus Glutaeüs Medius (MGM) 5 und dessen geometrische Lage, wie in Fig. 3 dargestellt, eindeutig identifiziert.
   Ebenso ist b) die Kontur des im Bildbereich 1 sichtbaren unteren Endes der Wirbelsäule mit Wirbeln 9 und Wirbelkanal 6 exakt erkannt worden.
   Die gleiche Aussage trifft c) auf den Schlossknochen 7 zu, der eindeutig identifiziert und dessen Kontur bestimmt wurde.

Bei bestimmten Populationen von Schlachttieren, bei denen insbesondere der MGM 5 als ein wesentliches Element zur Ermittlung von Daten und Messwerten im Bildbereich sehr schwach ausgebildet ist, wodurch automatisch ablaufende Verfahren mittels Bildanalyse überwiegend zu Fehlerkennungen der Konturen und Strukturen führen, ist es alternativ sinnvoll, Stützpunkte vor dem Start der Bildanalyse zu markieren.
Im Bildbereich 1 werden optional der erste Stützpunkt 10 im MGM 5 zum Auffinden von Helligkeitsinformationen und/oder der zweite Stützpunkt 11 auf das craniale Ende des MGM 5 als Lageinformation gesetzt sowie optional zum sicheren Auffinden des Wirbelkanals 6 vorzugsweise zwei benachbarte Wirbel 9 mit jeweils einem weiteren Stützpunkt 12 markiert als auch optional der Schlossknochen 7 mit dem zusätzlichen Stützpunkt 13 und erst danach die Bildanalyse zur Erkennung von Konturen und Strukturen mit sich in bekannter Weise anschließender Bestimmung von Messwerten und Daten im Bildbereich, gestartet.

Wie gebräuchlich wird als Ausgangslinie für nachfolgende Messungen an die obere (dorsale) Kante des Wirbelkanals 6 eine Gerade 14 mit der Richtung des geraden Abschnitts der Wirbelsäule gelegt. Auf dieser Geraden 14 wird eine Senkrechte 15 in Höhe des vorderen (cranialen) Ende des MGM 5 errichtet, deren Streckenlänge als kürzeste Verbindung vom vorderen Ende des MGM 5 zur oberen (dorsalen) Kante des Wirbelkanals 6 dem Fleischmaß (F) als Stärke des Lendenmuskels entspricht. Die Verlängerung der Senkrechten 15 bis zur Außenkontur 2 begrenzt den Speckverlauf über dem MGM 5 cranial.
In Höhe der dünnsten Speckschicht am MGM 5 wird eine Verbindungslinie 16 von der Kontur des MGM 5 zur Außenkontur 2 bestimmt, deren Streckenlänge das Speckmaß (S) repräsentiert.

Aus den beiden Termen (F) und (S), gemessen in Millimetern, erfolgt online die Berechnung des Muskelfleischanteils (MF%) mit der landesspezifischen amtlichen Formel aus dem ZP-Verfahren mit nachfolgender Handelsklasseneinstufung auf Grundlage des ermittelten prozentualen Muskelfleischanteils.

An Hand einer Anzahl weiterer im Bildbereich 1 bestimmbarer Strecken, Winkel und Flächen sind weitergehende Aussagen zum jeweils analysierten Schlachttierkörper gegeben.

So können zum Beispiel auch Speck-, Fleisch- und Knochenmaße im Bereich der Wirbelsäule und des Schlossknochens 7 vermessen werden.

Als ein weiteres wichtiges Merkmal ist die histologische Unterteilung des Specks durch ein bindegewebeartiges Septum 17 in eine obere Speckschicht 18 und eine untere Speckschicht 19 ermittelbar. Die obere Speckschicht 18 wird als Unterschwartenfett und die untere Speckschicht 19 als Körperfettauflage bezeichnet.

Aus der Dicke des Unterschwartenfetts lassen sich Aussagen über den Muskelfleischanteil des Bauchs herleiten.

Aus Strecken und Flächen oberhalb der Wirbel 9 lassen sich vorzugsweise genaue Aussagen über die Koteletten gewinnen. Weiter wird zum Bewerten des Schinken die mittlere Speckdicke über dem MGM 5, im Bereich der Fläche zwischen der Verlängerung der Senkrechten 15 bis zur Außenkontur 2 und einer anderen Senkrechten 20 auf der Geraden 14 einbezogen, die ebenfalls in die Handelswertbestimmung eingeht.

Der prozentuale Anteil von Teilstücken, wie dem Schinken oder den Koteletten, im Verhältnis zum ganzen Körper des Schlachttiers, kann direkt aus den Daten der Messwerte der Bildanalyse bestimmt werden ebenso wie der prozentuale Anteil des Muskelfleischs des jeweiligen Teilstücks.
In weitergehenden Berechnungen ist wiederum beispielsweise der prozentuale Anteil des Muskelfleischs des Schinkens ohne Knochen und Fett bestimmbar.
Unter Einbeziehung des nach dem Ausnehmen des Schlachttierkörpers erfassten Gesamtgewichts aus den beiden am Haken hängenden, zusammengehörenden Hälften, kann weiter die Einzelteilausbeute berechnet werden, womit sich aus der Summe der Teilstückbewertungen der Handelswert sowie aus der Summe der Gewichte der Teilstücke der Marktwert ergibt.
An Hand der bestimmten prozentualen Anteile lassen sich dann die Gewichtsangaben für betreffenden Teile wie Schinken, Kotelett und weiterer wertvoller Teilstücke auf Basis des Gesamtgewichts berechnen.

Die Qualitätseinstufung des Schlachtkörpers und/oder von Teilstücken erfolgt an Hand der vorliegenden weiteren charakteristischen Bildinformationen in Form von Helligkeits- und/oder Farbwerten.

### Verwendete Bezugszeichen

- 1: Bildbereich
- 2: Außenkontur
- 3: Speckflächen
- 4: Fleischflächen
- 5: Musculus Glutaeus Medius (MGM)
- 6: Wirbelkanal
- 7: Schlossknochen
- 8: ähnliche Fleischfläche
- 9: Wirbel
- 10: erster Stützpunkt
- 11: zweiter Stützpunkt
- 12: weiterer Stützpunkt
- 13: zusätzlicher Stützpunkt
- 14: Gerade
- 15: Senkrechte
- 16: Verbindungslinie
- 17: Septum
- 18: obere Speckschicht
- 19: untere Speckschicht
- 20: andere Senkrechte

## Patentansprüche

1. Nichtinvasives Verfahren zum automatischen Erkennen von komplex strukturierten Konturen mit gegen Null tendierender Fehlerkennungsrate durch Interaktion eines Bedieners mit einem Rechner, mit dem Merkmale eines Schlachttierkörpers voneinander unterschieden und identifiziert werden können, das auf Basis eines charakteristischen Teilstücks mittels Bildverarbeitung zur Bestimmung von Daten in Form von Meßwerten einzelner Strecken, Teilstrecken, gemittelter Strekken und Flächen anhand von Konturverläufen zur Berechnung des Muskelfleischanteils, der Handelsklasse sowie den damit im Zusammenhang stehenden Handelswert und Marktwert als auch zur Qualitätseinstufung von Schlachttierkörpern mit weiteren charakteristischen Bildinformationen dient, **dadurch gekennzeichnet,**
**dass** bei einer Fehlerkennung von zu unterscheidenden und identifizierenden komplex strukturierten Konturen eines Schlachttierkörpers, ein Bediener an einer Arbeitsstation in Form eines PC's mit dem Rechner in Interaktion tritt und hinreichende Hinweise auf die nicht oder nicht richtig erkannte, zu suchende Kontur gibt, indem unter Nutzung einer Bildwiedergabeeinrichtung in die Darstellung eines Bildes des interessierenden Bereichs des Schlachttierkörpers jeweils mindestens ein Stützpunkt in einem oder mehreren Bereichen, in denen Daten aus Messungen ermittelt werden sollen, gesetzt wird.

2. Verfahren nach Anspruch 1, **dadurch gekennzeichnet,**
**dass** die Stützpunkte als geometrische Vorgaben den Anfangspunkt, den Endpunkt oder einen beliebigen Punkt innerhalb der zu erkennenden Kontur kennzeichnen.

3. Verfahren nach den Ansprüchen 1 oder 2, **dadurch gekennzeichnet,**
**dass** optional ein erster Stützpunkt (10) im MGM (5) zum Auffinden von Helligkeitsinformationen und/oder ein zweiter Stützpunkt (11) auf das craniale Ende des MGM (5) als Lageinformation gesetzt wird.

4. Verfahren nach den Ansprüchen 1 oder 2, **dadurch gekennzeichnet,**
**dass** optional zum sicheren Auffinden eines Wirbelkanals (6) vorzugsweise zwei benachbarte Wirbel (9) mit jeweils einem weiteren Stützpunkt (12) markiert werden.

5. Verfahren nach den Ansprüchen 1 oder 2, **dadurch gekennzeichnet,**
**dass** optional ein Schlossknochen (7) mit einem zusätzlichen Stützpunkt (13) markiert wird.

6. Verfahren nach Anspruch 1, **dadurch gekennzeichnet,**
**dass** die Stützpunkte einen unzulässigen Bereich für die zu erkennenden Kontur kennzeichnen.

7. Verfahren nach einem der Ansprüche 1 bis 6, **dadurch gekennzeichnet,**
**dass** aus der Analyse der Umgebung des Stützpunktes Startparameter für den Konturerkennungsalgorithmus gewonnen werden.

8. Verfahren nach Anspruch 7, **dadurch gekennzeichnet,**
**dass** als Startparameter minimale, maximale oder durchschnittlichen Luminanzen, Chrominanzen und Kontraste genutzt werden.

9. Verfahren nach Anspruch 7, **dadurch gekennzeichnet,**
**dass** als Startparameter komplexe Merkmale wie Texturen ermittelt werden.

10. Verfahren nach Anspruch 1, **dadurch gekennzeichnet,**
**dass** bei Vorgabe von mehr als einem Stützpunkt für eine zu erkennende Kontur zusätzlich Tensorvorgaben höherer Ordnung ermittelt werden, wie Vektorvorgaben ab zwei Stützpunkten und Krümmungsvorgaben ab drei Stützpunkten.

11. Verfahren nach Anspruch 1, **dadurch gekennzeichnet,**
**dass** der prozentuale Anteil von Teilstücken des Schlachttierkörpers direkt aus den Daten der Messwerte der Bildanalyse bestimmt werden.

## Claims

1. Non-invasive method of automatically identifying contours with complex structures having an error recognition rate, which tends towards zero, by the interaction of an operator with a computer, which method can be used to distinguish and identify features of a slaughtered animal body with respect to each other, said method being utilised on the basis of a characteristic piece to determine, by means of image processing, data in the form of measurement values of individual sections, partial sections, averaged sections and areas with reference to contour progressions to calculate the muscle-meat percentage, the trade classification and the associated trade value and market value, and also to rate the quality of slaughtered animal bodies with further characteristic image information, **characterised in that**
during error recognition of contours of a slaughtered animal body which are to be distinguished and identified and which have complex structures, an operator at a workstation in the form of a PC interacts with the computer and provides sufficient indications relating to the unidentified or incorrectly identified contour to be sought, **in that** by utilising an image reproduction device at least one support point is set in each case in the illustration of an image of the region of interest of the slaughtered animal body in one or several regions, in which data are to be determined from measurements.

2. Method as claimed in claim 1, **characterised in that**
the support points as geometric set points denote the starting point, the end point or any point within the contour to be identified.

3. Method as claimed in claims 1 or 2, **characterised in that**
optionally a first support point (10) is set in the MGM (5) to find brightness information and/or a second support point (11) is set on the cranial end of the MGM (5) as positional information.

4. Method as claimed in claims 1 or 2, **characterised in that**
optionally in order to reliably find a vertebral canal (6) preferably two adjacent vertebrae (9) are marked in each case with a further support point (12).

5. Method as claimed in claims 1 or 2, **characterised in that**
optionally a pin bone (7) is marked with an additional support point (13).

6. Method as claimed in claim 1, **characterised in that**
the support points denote an unacceptable region for the contour which is to be identified.

7. Method as claimed in any one of claims 1 to 6, **characterised in that**
starting parameters for the contour recognition algorithm are acquired from the analysis of the area surrounding the support point.

8. Method as claimed in claim 7, **characterised in that**
minimum, maximum or average luminances, chrominances and contrasts are utilised as the starting parameters.

9. Method as claimed in claim 7, **characterised in that**
complex features like textures are determined as starting parameters.

10. Method as claimed in claim 1, **characterised in that**
for the specification of more than one support point for a contour which is to be identified, higher order tensor set points are additionally determined, such as vector set points from two support points and curvature set points from three support points.

11. Method as claimed in claim 1, **characterised in that**
the percentage of pieces of the slaughtered animal body are determined directly from the data of the measurement values of the image analysis.

## Revendications

1. Procédé non invasif de détection automatique de contours de structures complexes avec un taux de détection d'erreur tendant vers zéro par interaction d'un opérateur et d'un calculateur, permettant de distinguer et d'identifier les caractéristiques d'une carcasse d'un animal de boucherie, servant, sur la base d'un morceau caractéristique, par traitement d'images à déterminer des données sous la forme de valeurs de mesure de certains trajets, trajets partiels, moyennes de trajets et surfaces à l'aide de courbes de contour pour calculer la proportion de muscles, la classe commerciale, la valeur commerciale et la valeur marchande correspondantes, ainsi qu'également pour classer la qualité des carcasses d'animaux de boucherie, avec d'autres informations d'images, caractéristiques,
**caractérisé en ce qu'**
en cas d'une détection d'erreur de contours de structure complexe à distinguer et à identifier d'une carcasse d'animal, un opérateur utilisant un poste de travail sous la forme d'un PC équipé d'un calculateur, procède par interaction et introduit des informations suffisantes sur le contour à analyser, non détecté ou non détecté correctement, en utilisant une installation de reproduction d'images, et en fixant dans la représentation d'une image de la zone intéressante de la carcasse, chaque fois au moins un point d'appui dans une ou plusieurs zones dans lesquelles il faut déterminer des données à partir des mesures.

2. Procédé selon la revendication 1,
**caractérisé en ce que**
les points d'appui caractérisent comme consignes géométriques, le point initial, le point final ou un point quelconque du contour à reconnaître.

3. Procédé selon la revendication 1 ou 2,
**caractérisé en ce qu'**
en option, on fixe un premier point d'appui (10) en MGM (5) pour trouver des informations de luminosité et/ou un second point d'appui (11) à l'extrémité craniale du MCM (5) comme information de position.

4. Procédé selon les revendications 1 ou 2,
**caractérisé en ce qu'**
en option, pour garantir la recherche d'un canal médullaire (6), on marque de préférence deux vertèbres voisines (9) avec chaque fois un autre point d'appui (12).

5. Procédé selon les revendications 1 ou 2,
**caractérisé en ce qu'**
en option, on marque un os du quasi (7) avec un point d'appui supplémentaire (13).

6. Procédé selon la revendication 1,
**caractérisé en ce que**
les points d'appui caractérisent une zone non admissible pour le contour à détecter.

7. Procédé selon la revendication 1 à 6,
**caractérisé en ce qu'**
à partir de l'analyse de l'environnement des points d'appui, on recueille des paramètres de départ pour l'algorithme de détection de contour.

8. Procédé selon la revendication 7,
**caractérisé en ce que**
comme paramètres de départ, on utilise la luminance, la chrominance et le contraste minimum ou la luminance, la chrominance et le contraste maximum ou la luminance, la chrominance et le contraste moyens.

9. Procédé selon la revendication 7,
**caractérisé en ce que**
comme paramètres de départ, on utilise des caractéristiques complexes telles que des textures.

10. Procédé selon la revendication 1,
**caractérisé en ce qu'**
en prédéfinissant plus d'un point d'appui pour un contour à reconnaître, on détermine des spécifications de tenseurs d'une classe supérieure comme des spécifications vectorielles à partir de deux points d'appui et de spécifications de courbure à partir de trois points d'appui.

11. Procédé selon la revendication 1,
**caractérisé en ce qu'**
on détermine le pourcentage de pièces de carcasses directement à partir des données des valeurs de mesure de l'analyse d'image.
